# EUROPÄISCHE PATENTANMELDUNG

(11) **EP 4 450 679 A1**
(43) Veröffentlichungstag der Anmeldung: **23.10.2024**
(21) Anmeldenummer: 23020189.9
(22) Anmeldetag: 20.04.2023
(51) Int. Cl.: C25B 1/04, C25B 15/08, C01B 13/02, B01D 53/04, B01D 53/46

(54) **VERFAHREN UND ANLAGE ZUR HERSTELLUNG VON ELEKTROLYSESAUERSTOFF**

(71) Anmelder: Linde GmbH, 82049 Pullach (DE)
(72) Erfinder: Winkler, Florian, 82049 Pullach (DE); Dillig, Marius, 82049 Pullach (DE)
(74) Vertreter: Fischer, Werner

(57) **Zusammenfassung**

Es wird ein Verfahren (100, 200, 300, 400, 500) zur Herstellung von Elektrolysesauerstoff vorgeschlagen, wobei das Verfahren (100, 200, 300, 400, 500) umfasst, dass einer Elektrolyseeinrichtung (100) ein Sauerstoff, Wasserstoff und Wasser enthaltendes Anodengas (a, b) entnommen wird, in dem Anodengas (a, b) oder einem Teil hiervon der Wasserstoff oder ein Teil hiervon einer katalytischen Umsetzung (3, 3', 8a, 8b) mit einem Teil des Sauerstoffs zu weiterem Wasser unterworfen wird, und das Anodengas (a, b) oder ein Teil hiervon einer Trocknung (5, 6, 5', 6', 5", 6", 7a, 7b, 7a', 7b') unterworfen wird. In dem Verfahren (100, 200, 300, 400, 500) ist insbesondere vorgesehen, dass die katalytische Umsetzung (3, 3', 8a, 8b) eine oder mehrere erste Teilumsetzungen (3) und stromab der ersten Teilumsetzung(en) (3) eine oder mehrere zweite Teilumsetzungen (3', 8a, 8b) umfasst, und dass die Trocknung (5, 6, 5', 6', 5", 6", 7a, 7b) eine oder mehrere erste Teiltrockungen (5, 6, 5', 6', 5", 6", 7a, 7b) stromab der ersten Teilumsetzung(en) (3) und stromauf der zweiten Teilumsetzung(en) (3', 3, 8a, 8b) und eine oder mehrere zweite Teiltrockung(en) (7a', 7b') stromab der zweiten Teilumsetzung(en) (3', 3, 8a, 8b) umfasst. Eine entsprechende Anlage ist ebenfalls Gegenstand der vorliegenden Erfindung.

## Beschreibung

Die Erfindung betrifft ein Verfahren und Anlage zur Herstellung von Elektrolysesauerstoff, insbesondere unter Verwendung eines wassergesättigten, sauerstoffreichen und Wasserstoff enthaltenden Anodengases.

### Hintergrund

Die Herstellung von Wasserstoff und Sauerstoff mittels Wasserelektrolyse ist bekannt und beispielsweise in dem Artikel "Hydrogen" in Ullmann's Encyclopedia of Industrial Chemistry, Wiley-VCH, 15. Juni 2000, DOI: 10.1002/14356007.a13_297, insbesondere in Abschnitt 4.2, "Electrolysis", beschrieben.

Für die Wasserelektrolyse können Elektrolysezellen mit Protonenaustauschmembranen (engl. Proton Exchange Membranes, PEM) eingesetzt werden. In entsprechenden Elektrolysezellen wird ein Festpolymerelektrolyt, die Protonenaustauschmembran, verwendet. Die Protonenaustauschmembran dient zur Leitung von Protonen, zur Abtrennung der Produktgase und zur elektrischen Isolierung der Anoden- und Kathodenseite voneinander. Durch den Einsatz von Elektrolysezellen mit Protonenaustauschmembranen kann ein Teil der Probleme hinsichtlich des Teillastbetriebs sowie der geringen möglichen Stromdichten, die bei der konventionellen alkalischen Elektrolyse auftreten, überwunden werden.

Aufgrund des vergleichsweise hohen Drucks des gebildeten Wasserstoffs bei der Verwendung von Elektrolysezellen mit Protonenaustauschmembranen, können Verbraucher direkt versorgt werden. Die verwendbaren hohen Stromdichten führen zu vergleichsweise geringen Betriebskosten, insbesondere in Fällen, in denen dynamische elektrische Energiequellen wie Wind und Sonne zum Einsatz kommen, wobei Spitzen in der Energiezufuhr andernfalls nicht genutzt werden könnten. Der Polymerelektrolyt ermöglicht die Verwendung dünner Membranen von beispielsweise ca. 100 bis 200 µm bei zugleich hohen Drücken. Dies führt zu geringen ohmschen Verlusten, die in erster Linie durch die Leitung von Protonen durch die Membran und die Bildung von druckbeaufschlagtem Wasserstoff verursacht werden.

Die Polymerelektrolytmembran weist aufgrund ihrer festen Struktur eine niedrige Gasübergangsrate auf, was zu einer sehr hohen Produktgasreinheit führt. Dies kann insbesondere für die Speichersicherheit und für die direkte Verwendung der Produktgase, beispielsweise in einer Brennstoffzelle, vorteilhaft sein.

Die Anodenreaktion in einer Elektrolysezelle mit Protonenaustauschmembran wird gemeinhin als Sauerstoffentwicklungsreaktion (engl. Oxygen Evolution Reaction, OER) bezeichnet. An der Anode wird der flüssige Reaktant Wasser dem Katalysator zugeführt und zu Sauerstoff, Protonen und Elektronen oxidiert.

Die Kathodenreaktion wird gemeinhin als Wasserstoffentwicklungsreaktion (engl. Hydrogen Evolution Reaction, HER) bezeichnet. Hierbei werden die zugeführten Elektronen mit den durch die Membran geleiteten Protonen kombiniert, wodurch gasförmiger Wasserstoff erzeugt wird.

Wenngleich die vorliegende Erfindung nachfolgend (zumindest überwiegend) unter Bezugnahme auf eine Elektrolyse mittels Protonenaustauschmembranen beschrieben wird, eignen sich Ausgestaltungen der vorliegenden Erfindung grundsätzlich auch für andere Elektrolyseverfahren, bei denen die hier beschriebenen Probleme in gleicher Weise auftreten können. Diese können beispielsweise eine herkömmliche Wasserelektrolyse umfassen, bei der eine wässrige alkalische Lösung, typischerweise von Kaliumhydroxid, als Elektrolyt verwendet wird (AEL, Alkalische Elektrolyse). Die Elektrolyse erfolgt dabei mit einer uni- oder bipolaren Elektrodenanordnung und bei Atmosphärendruck oder im industriellen Maßstab auch deutlich darüber.

Die vorliegende Erfindung stellt sich die Aufgabe, die Herstellung von Sauerstoff, insbesondere unter Einsatz von Elektrolysezellen mit Protonenaustauschmembran, zu verbessern und insbesondere sicherer und zuverlässiger zu gestalten.

### Offenbarung der Erfindung

Vor diesem Hintergrund werden ein Verfahren und eine Anlage zur Herstellung von Elektrolysesauerstoff, insbesondere unter Verwendung eines wassergesättigten, sauerstoffreichen und Wasserstoff enthaltenden Anodengases einer Elektrolyse, mit den jeweiligen Merkmalen der unabhängigen Patentansprüche vorgeschlagen. Ausgestaltungen sind Gegenstand der abhängigen Patentansprüche und der nachfolgenden Beschreibung.

In dem hier vorgeschlagenen Verfahren wird ein als Anodengas bezeichnetes Gasgemisch verwendet, das einer Elektrolyseeinrichtung der eingangs erläuterten Art entnommen werden kann. Dieses ist typischerweise wassergesättigt und weist im überwiegenden Anteil Sauerstoff auf, jedoch auch zu einem nicht unbeträchtlichen Anteil auch Wasserstoff.

Beispielsweise wird in einer entsprechenden Elektrolyseeinrichtung, in der Protonenaustauschmembranen verwendet werden, eine Vielzahl von Elektrolysezellen verwendet, wobei die Elektrolysezellen insbesondere Teil eines oder mehrerer Elektrolysezellstapel (Stacks) bekannter Art sein können. In einem derartigen Elektrolysezellstapel ist im Fall einer Elektrolyse unter Verwendung einer Protonenaustauschmembran eine Vielzahl von Anordnungen aus jeweils Anode, Protonenaustauschmembran und Kathode bereitgestellt, die jeweils durch Trenneinrichtungen und Mittel zur Wassereinspeisung bzw. Gasentnahme voneinander getrennt sind. In anderen Elektrolyseverfahren können die dort verwendeten Elemente ebenfalls in Mehrzahl vorhanden sein. Es können Einspeise- bzw. Sammelleitungen bereitgestellt sein, die den oder die Elektrolysezellstapel insgesamt versorgen.

Unter dem hier als Anodengas bezeichneten Gasgemisch soll dabei das anodenseitig dem oder den Zellstapeln insgesamt entnommene Gas oder ein Teil hiervon verstanden werden. Bei Verwendung von Protonenaustauschmembranen wird das Anodengas dabei zusammen mit Wasser an der Anodenseite entnommen, d.h. von der Anodenseite wird zunächst ein Zweiphasenstrom ausgeführt. Nach einer Trennung in Gas- und Flüssigphase in einem Separator liegt das Anodengas in Form der Gasphase vor. Andere Elektrolyseverfahren können ebenfalls ein Anodengas liefern, das in dem vorgeschlagenen Verfahren eingesetzt werden kann.

Ein Hauptproblem hinsichtlich des Anodengases ergibt sich aus dessen möglichem Wasserstoffgehalt. Angetrieben beispielsweise durch das Druckgefälle über eine Protonenaustauschmembran, kann Wasserstoff durch diese durch Permeation passieren, verstärkt aber beim Auftreten von Defekten bzw. Rissen. Beispielsweise bei Niedriglast, im Standby-Betrieb, bzw. bei Defekten, kann dieser Wasserstoffgehalt ggf. die untere Explosionsgrenze (UEG) von ca. 4 Volumenprozent Wasserstoff in Sauerstoff erreichen.

Die (untere) Explosionsgrenze eines Gases gibt den Gehalt in einem Gasgemisch an, ab dem eine Entzündung bzw. Explosion bei zugleich ausreichendem Sauerstoffgehalt möglich ist. Letzteres ist im Falle des sauerstoffreichen Anodengases immer der Fall.

Bei einer Explosion handelt es sich um einen unkontrollierten Abbrand eines zündfähigen Gasgemischs mit laminarer Flammenfront. Eine Explosion unterscheidet sich von einer Detonation im Wesentlichen durch die Geschwindigkeit der Flammenausbreitung. Da die Knallgasreaktion zwischen Wasserstoff und Sauerstoff sehr schnell verläuft, können sich sehr hohe Flammengeschwindigkeiten ergeben, die oberhalb der Schallgeschwindigkeit liegen. Daher kann eine Explosion selbst in kleinen Räumen und Rohrleitungen in eine Detonation übergehen.

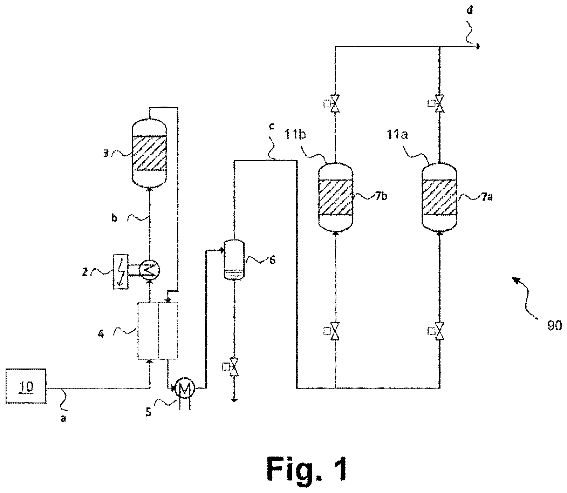

In einem nicht erfindungsgemäßen Verfahren, wie es beispielsweise in Figur 1 veranschaulicht ist und unten erläutert wird, wird zunächst in einem katalytischen Schritt im Wesentlichen der gesamte Wasserstoff im Anodengas zu Wasser umgesetzt. Das Gesamtwasser wird anschließend zu einem Teil kondensativ entfernt. Ein adsorptiver Trocknungsschritt schließt sich typischerweise an.

Das komplette Verfahren zur Aufbereitung des Anodengases wird vorteilhafterweise hinsichtlich des Druckverlusts bis zum Punkt der Entfernung des Wasserstoffs optimiert, um hohe Auslegungsdrücke für den Detonationsfall zu vermeiden. Aufgrund der hohen Sauerstoffkonzentration von typischerweise weit über 90 Volumenprozent werden niedrige Temperaturen von typischerweise weniger als 200 °C empfohlen, um übermäßig hohe Anforderungen an die Ausrüstung hinsichtlich der Explosions- bzw. Detonationsmitigation zu vermeiden.

Es wurde als vorteilhaft erkannt, den Wasserstoff zuerst und so schnell wie möglich und ohne Vorverdichtung aus dem Anodengas zu entfernen, um auf diese Weise einen hohen Auslegungsdruck zu vermeiden und die nachgeschalteten Einrichtungen vor einer Explosion bzw. Detonation zu schützen. Um die Anwesenheit von flüssigem Wasser in der katalytischen Umsetzung zu vermeiden, wird das Anodengas insbesondere in der unten veranschaulichten Weise vorgewärmt, um es auf ein Temperaturniveau zu bringen, das mindestens 15 K über dem Taupunkt am Einlass der katalytischen Umsetzung liegt.

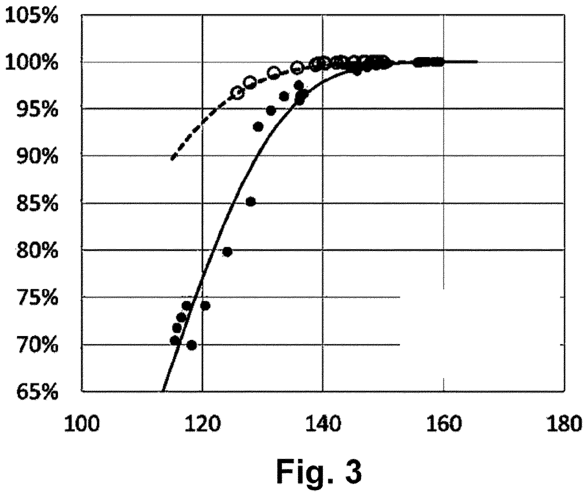

Die für die Wasserstoffentfernung eingesetzten Katalysatoren weisen allerdings bei hohem Wasserpartialdruck niedrigere Aktivitäten auf, wie unten unter Bezugnahme auf Figur 3 erläutert. Eine derartige Wasserinhibition ist insbesondere abhängig vom Wasserpartialdruck im Anodengas und der Eignung des Katalysatorträgermaterials. Daher werden herkömmlicherweise mindestens Temperaturen von 100 °C und/oder hohe Edelmetallgehalte und/oder hohe Katalysatorvolumina verwendet, um die Leistung von Standardkatalysatoren zu gewährleisten, mittels welcher ein Zielwert von weniger als 10 Millionstel Volumenanteilen (vppm) Wasser im Endprodukt angestrebt wird. Darüber hinaus kann die Wasserinhibition durch eine Erhöhung der Einlasstemperatur kompensiert werden.

Zusammengefasst wurde im Rahmen der vorliegenden Erfindung und Ausgestaltungen hiervon als ein zentrales Problem identifiziert, dass eine hohe Wasserkonzentration im Anodengas und ein niedriger Sauerstoffdruck zu einer geringeren Aktivität der typischen, zur Sauerstoffentfernung verwendeten Katalysatoren führt. Hierbei sind insbesondere folgende Teilaspekte von Relevanz:
a) hoher Druckverlust aufgrund des erforderlichen größeren Katalysatorvolumens
b) hohe Investitionen aufgrund des erforderlichen größeren Katalysatorvolumens
c) hohe Betriebskosten aufgrund der höheren Edelmetallgehalts
d) hohe Betriebskosten aufgrund der Energie für die Vorwärmung
e) hohe Materialanforderungen aufgrund hoher Eintrittstemperaturen
f) steigender Energieaufwand für den Vorwärmer aufgrund von Katalysatoralterung

Mittels des nun vorgeschlagenen Verfahrens kann zumindest ein Teil dieser Probleme überwunden werden. Das vorgeschlagene Verfahren eignet sich dabei insbesondere für Katalysatoren, die auch als "CatOx"-Katalysatoren bekannt sind und beispielsweise auch für die Entfernung von Sauerstoff aus Elektrolysewasserstoff verwendet werden. Es kann sich insbesondere um Palladium-, Platin- oder Mischkatalysatoren aus Palladium und Platin handeln.

Das hier vorgeschlagene Verfahren zur Herstellung von Elektrolysesauerstoff umfasst, mit anderen Worten, dass einer Elektrolyseeinrichtung ein Sauerstoff, Wasserstoff und Wasser enthaltendes Anodengas entnommen wird, in dem Anodengas oder einem Teil hiervon der Wasserstoff oder ein Teil hiervon einer katalytischen Umsetzung mit einem Teil des Sauerstoffs zu weiterem Wasser unterworfen wird, und das Anodengas oder ein Teil hiervon einer Wasserentfernung unterworfen wird.

Das Verfahren zeichnet sich dadurch aus, dass die katalytische Umsetzung eine oder mehrere erste Teilumsetzungen und stromab der ersten Teilumsetzung(en) eine oder mehrere zweite Teilumsetzungen umfasst, und dass die Trocknung insbesondere eine oder mehrere erste Teiltrockungen stromab der ersten Teilumsetzung(en) und stromauf der zweiten Teilumsetzung(en) und eine oder mehrere zweite Teiltrockungen stromab der zweiten Teilumsetzung(en) umfasst.

Die zuvor genannten Probleme werden in dem hier vorgeschlagenen Verfahren insbesondere durch eine zweistufige katalytische Umsetzung gelöst. Die eine oder die mehreren ersten Teilumsetzungen, bspw. unter Verwendung einer Katalysatorschicht in einem entsprechenden Behälter bzw. Reaktor, entfernt bzw. entfernen dabei insbesondere den Großteil des Wasserstoffs, um zu vermeiden, dass dieser die Explosionsgrenze erreicht. Auf diese Weise wird sehr rasch eine ausreichende Reduktion des Wasserstoffgehalts erzielt und die Auslegungsdrücke für nachgeschaltete Apparate können reduziert werden.

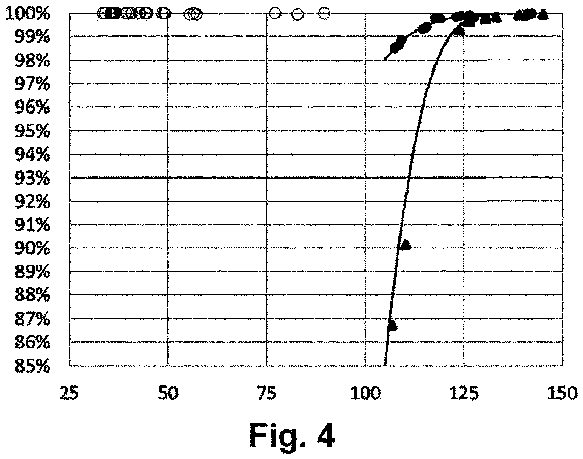

Die eine oder die mehreren zweiten Teilumsetzungen, bspw. in einem Ausführungsbeispiel unter Verwendung einer zusätzlichen Katalysatorschicht innerhalb der in ansonsten fachüblicherweise ausgebildeten und betriebenen Adsorptionstrockner, reduziert bzw. reduzieren den Wasserstoffgehalt dann weiter. Diese weitere Reduzierung ist besonders effektiv, da der Katalysator hier unter vergleichsweise trockenen Bedingungen betrieben wird, unter denen er am effizientesten ist. Dies ist auch im Zusammenhang mit Figur 4 unten diskutiert.

In Ausgestaltungen der vorliegenden Erfindung, bei denen die zweite(n) Teilumsetzung(en) innerhalb entsprechender Adsorptionsbehälter erfolgen, können also insbesondere ein Teil der erste(n) Teiltrocknung(en), die zweite(n) Teiltrocknung(en) und die zweite(n) Teilumsetzung(en) unter Verwendung eines oder mehrerer, zumindest periodisch mit dem Anodengas oder einem Teil hiervon durchströmter Druckbehälter durchgeführt werden, in dem oder denen von stromauf nach stromab ein oder mehrere erste Adsorptionstrocknungsbetten, ein oder mehrere katalytische Betten, und ein oder mehrere zweite Adsorptionstrocknungsbetten angeordnet sind. Die erste(n) Teiltrockung(en) umfasst bzw. umfassen typischerweise stromauf der Druckbehälter einen oder mehrere kondensative Schritte.

Hierbei können insbesondere, wie auf dem Gebiet der Adsorption an sich bekannt, zumindest zwei Druckbehälter verwendet werden, die jeweils in ersten Zeitabschnitten mit dem Anodengas oder einem Teil hiervon durchströmt und in zweiten Zeitabschnitten thermisch regeneriert werden. Hierbei steht typischerweise stets mindestens einer der Druckbehälter für eine Adsorption bzw. Umsetzung zur Verfügung, um eine kontinuierliche Bereitstellung des aufbereiteten Elektrolysesauerstoffs sicherzustellen.

Die erste(n) Teiltrocknung(en) kann bzw. können in Ausgestaltungen der vorliegenden Erfindung, wie erwähnt, insbesondere eine oder mehrere Kondensationstrocknungen umfassen. Auf diese Weise lässt sich der Wasserpartialdruck bzw. Wassergehalt in besonders vorteilhafter Weise reduzieren, so dass eine anschließende adsorptive Trocknung nicht überlastet wird.

In Ausgestaltungen der Erfindung kann bzw. können mehrere Kondensationstrocknungen durchgeführt werden, zwischen denen eine Verdichtung vorgenommen wird. Insbesondere kann auch stromab der Kondensationstrocknungen insgesamt eine Verdichtung vorgenommen werden, im Zuge derer das Anodengas oder ein Teil hiervon auf ein erhöhtes Temperaturniveau gebracht wird, wobei das Anodengas oder ein Teil hiervon auf dem erhöhten Temperaturniveau der oder den zweiten Teilumsetzungen zugeführt wird. Auf diese Weise kann das Anodengas auf eine für die zweite(n) Teilumsetzung(en) geeignete Temperatur gebracht werden, ohne dass weitere Heizeinrichtungen erforderlich sind.

Eine entsprechende Verdichtung zwischen kondensativen Trocknungsschritten kann insbesondere zur Erhöhung der Effizienz des sich jeweils anschließenden kondensativen Trocknungsschritts beitragen. Durch diese Maßnahme wird der Systemdruck erhöht, und nach einer entsprechenden Abkühlung kann zusätzliches Wasser auskondensiert werden, was die benötigte Kapazität einer adsorptiven Trocknung stromab hiervon reduziert und die Effizienz beispielsweise zusätzlich in entsprechenden Adsorptionsbetten angeordneter Katalysatoren weiter erhöht. Je nach Eingangsdruck kann die Verdichtung als ein- oder mehrstufige Verdichtung an beliebiger Stelle ausgeführt werden.

In entsprechenden Ausgestaltungen kann also für den oder die zweiten Umsetzungsschritte auch ein separater Reaktor bzw. Behälter verwendet werden, wobei hier insbesondere eine aufgrund der stromaufwärtigen Teilentfernung von Wasserstoff eine Verdichtung vorgesehen sein kann. Hierbei kann die Kompressionswärme genutzt werden und das Anodengas trifft mit höherer Temperatur und einem niedrigeren Wasserpartialdruck auf einen entsprechenden Katalysator in dem oder den zweiten Umsetzungsschritten.

Für die die erste(n) Teilumsetzung(en) können insbesondere auch mehrere Katalysatoren oder Katalysatorbetten verwendet werden. Eine derartige Ausgestaltung kann insbesondere zur weiteren Kostenoptimierung beitragen. So kann z.B. am Eingang der erste(n) Teilumsetzung(en) eine Katalysatorschicht mit hoher Edelmetallbeladung oder hoher Wasserbeständigkeit angeordnet werden, gefolgt von einer Schicht eines günstigeren Katalysators mit geringerer Edelmetallbeladung. Die erste Schicht wandelt Wasserstoff bereits bei niedrigeren Temperaturen um und erhöht die Temperatur im adiabatischen Reaktor. Bei ausreichend hohen Temperaturen von insbesondere mehr als 100 °C können auch Katalysatoren mit geringerer Metallbeladung zur weiteren Wasserstoffentfernung verwendet werden.

In Ausgestaltungen des vorgeschlagenen Verfahrens ist insbesondere vorgesehen, dass mittels der erste(n) Teilumsetzung(en) 80 bis 99% des Wasserstoffs aus dem Anodengas oder einem Teil hiervon entfernt wird. Ferner kann in entsprechenden Ausgestaltungen mittels der zweiten Teilumsetzung(en) ein Wasserstoffgehalt in dem Anodengas auf weniger als 10 ppmv reduziert werden.

In entsprechenden Ausgestaltungen des vorgeschlagenen Verfahrens wird in dem oder den ersten Umsetzungsschritten also vorteilhafterweise der Wasserstoff nicht bis auf 10 ppmv oder darunter entfernt, wie dies für die Bereitstellung eines entsprechenden Produkts am Ende notwendig ist. Anstelle von mehr als 99,5% Konversionsrate sind beispielsweise bereits 90% Konversionsrate ausreichend. Die Entfernung des Wasserstoffs bis auf 10 ppmv oder sogar darunter wird durch den oder die zweiten Umsetzungsschritte realisiert.

Hinsichtlich des oder der ersten Umsetzungsschritte wird hierdurch eine Reihe von Vorteilen erzielt. Insbesondere kann der Energieverbrauch für die erforderliche Betttemperatur reduziert werden. Entsprechendes gilt auch für den Energieverbrauch für die Katalysatordeaktivierungskompensation, geringeren Druckverlust und Katalysatorkosten durch die Bettdimensionierung, die Edelmetallbeladung des Katalysators und die Katalysatorkosten sowie die Sauerstoffproduktqualität.

In Ausgestaltungen des vorgeschlagenen Verfahrens kann das Anodengas oder ein Teil hiervon unter Verwendung eines Wärmepumpenprozesses erwärmt werden. In diesem kann vorteilhafterweise Abwärme der Elektrolyse verwendet und auf diese Weise besonders vorteilhaft genutzt werden.

Wie bereits zuvor mehrfach erwähnt, kann unter Verwendung der Elektrolyseeinrichtung eine alkalische Wasserelektrolyse und/oder eine Wasserelektrolyse unter Verwendung einer Protonenaustauschmembran durchgeführt werden, und die Erfindung ist nicht auf die jeweilige Art der Elektrolyse beschränkt.

Die vorgeschlagene Anlage zur Herstellung von Elektrolysesauerstoff ist dafür eingerichtet einer Elektrolyseeinrichtung ein Sauerstoff, Wasserstoff und Wasser enthaltendes Anodengas zu entnehmen, in dem Anodengas oder einem Teil hiervon den Wasserstoff oder einen Teil hiervon einer katalytischen Umsetzung mit einem Teil des Sauerstoffs zu weiterem Wasser zu unterwerfen, und das Anodengas oder ein Teil hiervon einer Wasserentfernung zu unterwerfen.

Die Anlage zeichnet sich durch Mittel aus, die dafür eingerichtet sind, die katalytische Umsetzung als eine oder mehrere erste Teilumsetzungen und stromab der ersten Teilumsetzung(en) als eine oder mehrere zweite Teilumsetzungen umfassend durchzuführen, und die Trocknung insbesondere als eine oder mehrere erste Teiltrockungen stromab der ersten Teilumsetzung(en) und stromauf der zweiten Teilumsetzung(en) und als eine oder mehrere zweite Teiltrockung(en) stromab der zweiten Teilumsetzung(en) umfassend durchzuführen.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

### Kurze Beschreibung der Zeichnung

Ausführungsformen der Erfindung werden nachfolgend rein beispielhaft unter Bezugnahme auf die beigefügte Zeichnung beschrieben, wobei
Figur 1 ein nicht erfindungsgemäßes Verfahren veranschaulicht,
Figur 2 ein Verfahren gemäß einer Ausgestaltung der Erfindung veranschaulicht,
Figuren 3 und 4 Katalysatoreigenschaften anhand eines Diagramms veranschaulichen,
Figuren 5 bis 8 Verfahren gemäß Ausgestaltungen der Erfindung veranschaulichen.

### Ausführungsformen der Erfindung

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Die vorliegende Erfindung und Ausgestaltungen hiervon werden nachfolgend unter Bezugnahme auf eine Elektrolyse mit Protonenaustauschmembran erläutert. Wie mehrfach angesprochen, ist die Erfindung jedoch nicht hierauf beschränkt.

In Figur 1 ist ein nicht erfindungsgemäßes Verfahren zur Herstellung von Elektrolysesauerstoff dargestellt und insgesamt mit 90 bezeichnet.

In dem Verfahren 90 wird eine Elektrolyseeinrichtung 10 verwendet, der ein Anodengas a entnommen wird. Dieses Anodengas a liegt im Fall einer Wasserelektrolyse unter Verwendung von Protonenaustauschmembranen wassergesättigt bei typischerweise 50 bis 80 °C und 0 bis 5 bar vor. Es weist zusätzlich Wasserstoff auf, dessen Menge insbesondere von der Druckdifferenz zwischen der Kathodenseite und der Anodenseite und der Belastung der Membran (Stromdichte) abhängen kann. Der Wasserstoffgehalt kann bei Minimallast 2,5 Volumenprozent überschreiten und kann bei Volllastbetrieb in einem Bereich von 0,3 bis 0,5 Volumenprozent liegen. Im Worst Case (Leck oder Riss der Membran) können insbesondere Konzentrationen erreicht werden, die bei Entzündung zu einer Explosion und/oder Detonation führen könnten.

Das Anodengas a wird im dargestellten Beispiel unter Verwendung eines optionalen Gegenstromwärmetauschers 4 und einer insbesondere elektrisch betriebenen Heizeinrichtung 2 erwärmt, um eine für eine anschließende katalytische Umsetzung 3 des Wasserstoffs ausreichende Temperatur des nun mit b bezeichneten Anodengases zu erreichen. Nach der katalytischen Umsetzung 3 im Wesentlichen des gesamten Wasserstoffs in dem erwärmten Anodengas b wird dieses optional in dem Gegenstromwärmetauscher 4 und sodann in einem Wasserkühler 5 abgekühlt und in einen Abscheider 6 eingespeist. Mittels des Wasserkühlers 5 und des Abscheiders 6 wird eine teilweise Wasserentfernung erreicht.

Das auf diese Weise teilgetrocknete Anodengas c wird sodann einer adsorptiven Trocknung zugeführt, in der im dargestellten Beispiel zwei Druckbehälter 11a, 11b vorgesehen sind, in denen jeweils ein Adsorptionstrocknungsbett 7a bzw. 7b veranschaulicht ist. Diese werden in an sich bekannter Weise im Wechselbetrieb mit dem Anodengas durchströmt, wodurch ein getrocknetes und im Wesentlichen wasserstofffreies Anodengas d erhalten wird, das als Elektrolysesauerstoff an der Anlagengrenze abgegeben, gespeichert und/oder komprimiert werden kann.

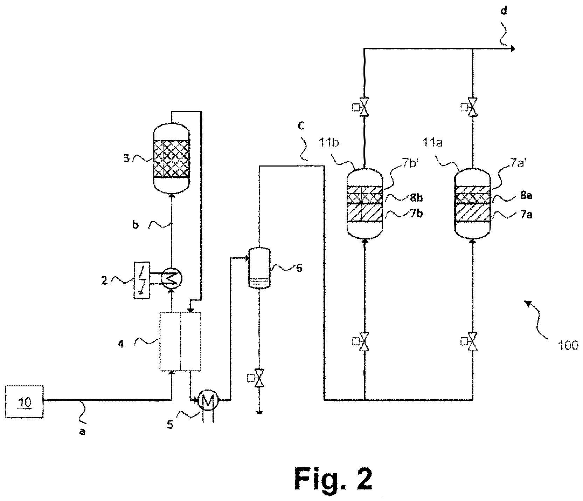

In Figur 2 ist ein Verfahren zur Herstellung von Elektrolysesauerstoff gemäß einer Ausgestaltung der Erfindung dargestellt und insgesamt mit 100 bezeichnet.

In dem hier veranschaulichten Verfahren werden die Anforderungen an die katalytische Umsetzung 3 bzw. einen entsprechenden Reaktor reduziert, indem eine Katalysatorschicht innerhalb der adsorptiven Trocknung bereitgestellt wird. Die adsorptive Trocknung wird auch in dem hier veranschaulichten Beispiel mittels zweier Druckbehälter durchgeführt, die wie oben mit 11a, 11b angegeben sind. Wie erwähnt, kann auch eine beliebige Anzahl weiterer Druckbehälter vorgesehen sein. Das Adsorptionstrocknungsbett ist hier jeweils durch eine zwischengeschaltete katalytische Schicht 8a, 8b, die im hier verwendeten Sprachgebrauch für eine zweite Teilumsetzung 8a, 8b vorgesehen ist, unterbrochen bzw. ist die katalytische Schicht 8a, 8b in jedem der Druckbehälter zwischen zwei Adsorptionstrocknungsteilbetten 7a und 7a' bzw. 7b und 7b' angeordnet.

Die stromaufwärtige katalytische Umsetzung 3, im hier verwendeten Sprachgebrauch auch als erste Teilumsetzung 3 bezeichnet, erfolgt im Wesentlichen wie zu Figur 1 erläutert, jedoch wird hier der Wasserstoffgehalt nur in einem geringeren Umfang entfernt als dies vorstehend der Fall ist.

In allgemeinerer Formulierung umfasst die katalytische Umsetzung hier eine oder mehrere erste Teilumsetzungen 3 und stromab der ersten Teilumsetzung(en) 3 eine oder mehrere zweite Teilumsetzungen 8a, 8b. Die Trocknung umfasst mit dem kondensativen Schritten 5 und 6, d.h. Kühlung und Wasserabscheidung, und dem Teil des adsorptiven Trocknungsbetts 7a, 7b stromauf der zweiten Teilumsetzung(en) 8a, 8b eine oder mehrere erste Teiltrockungen. Die Trocknung umfasst in dem dargestellten Beispiel ferner mit dem Teil des adsorptiven Trocknungsbetts 7a', 7b' stromab der zweiten Teilumsetzung(en) 8a, 8b eine oder mehrere zweite Teiltrockung(en) stromab der zweiten Teilumsetzung(en) 8a, 8b.

Ein Teil der erste(n) Teiltrocknung(en), nämlich jene in den adsorptiven Trocknungsbetten 7a, 7b stromauf der zweiten Teilumsetzung(en) 8a, 8b, die zweite(n) Teiltrocknung(en), nämlich jene in den adsorptiven Trocknungsbetten 7a', 7b' stromab der zweiten Teilumsetzung(en) 8a, 8b, und die zweite(n) Teilumsetzung(en) 8a, 8b selbst werden hier also unter Verwendung zweier, zumindest periodisch mit dem Anodengas a, b oder einem Teil hiervon durchströmter Druckbehälter durchgeführt, in denen von stromauf nach stromab ein erstes Adsorptionstrocknungs(teil)bett, ein katalytisches Bett, und ein zweites Adsorptionstrocknungs(teil)bett angeordnet sind.

In der Ausgestaltung gemäß Figur 2 weist das Anodengas a im Normalbetrieb der Elektrolyseeinrichtung 10 beispielsweise einen Partialdruck von 0,1 bis 0,4 bar Wasser sowie einen Gehalt von 0,2 bis 0,5 Volumenprozent Wasserstoff bei einem Gesamtdruck von 1,2 bis 5 bar Absolutdruck und einer Temperatur von 50 bis 80 °C auf. Die Vorwärmung des Anodengases a in der Vorwärmeinrichtung 2 erfolgt, wie erwähnt, insbesondere auf eine Temperatur von etwa 15 K über dem Taupunkt des Wassers, der unter den erwähnten Bedingungen bei 65 bis 95 °C liegen kann. In dem ersten Teilschritt 3 der katalytischen Umsetzung kann der Wasserstoff insbesondere auf unter 400 vppm, vorzugsweise unter 40 vppm, reduziert werden, wobei 400 vppm insbesondere bei einer Druckverlustoptimierung vorgesehen sein können.

Die sich anschließende Abkühlung in dem Kühler 5 erfolgt insbesondere zunächst auf 30 bis 50 °C (15°C, wenn eine Kältemaschine verwendet wird), und das Wasser wird in dem Abscheider 6 abgeschieden. Hierbei kann ein Feed-Effluent-Wärmetauscher, wie mit dem Wärmetauscher 4 veranschaulicht, verwendet werden. Die stromauf der katalytischen Betten 8a, 8b angeordneten Teile der Adsorptionstrocknungsbetten 7a, 7b sind insbesondere so ausgelegt, dass diese im Wesentlichen das gesamte restliche Wasser entfernen, bevor das Anodengas in die katalytischen Schichten 8a, 8b gelangt. Die katalytischen Schichten 8a, 8b entfernen den verbleibenden Wasserstoff insbesondere von maximal 400 vppm bis insbesondere auf weniger als 10 vppm.

Stromab der katalytischen Schichten wird durch den jeweils zweiten Teil der Adsorptionstrocknungsbetten 7a', 7b' das Spurenwasser entfernt, das durch die katalytische Reaktion in den katalytischen Betten 8a, 8b gebildet wird.

In Figur 3 sind in einem Diagramm Leistungsparameter eines typischen Katalysators, wie er im vorliegenden Fall zum Einsatz kommen kann und wie er oben erläutert wurde, veranschaulicht, wobei hier auf der Horizontalachse eine Temperatur stromab des katalytischen Betts in °C und auf der Vertikalachse eine Umsetzung in % angegeben ist. Die in Form unausgefüllter Kreise dargestellten Datenpunkte betreffen dabei einen Gehalt von 2 Volumenprozent Wasser im Einsatz, die in Form ausgefüllter Kreise dargestellten Datenpunkte einen Gehalt von 4 Volumenprozent Wasser.

Aus Figur 3 kann insbesondere abgeleitet werden, dass entsprechende Katalysatoren von höheren Wasserpartialdrücken insbesondere bei geringeren Temperaturen nachteilig beeinflusst werden.

In Figur 4 sind in einem weiteren Diagramm entsprechende Leistungsparameter veranschaulicht, wobei die Darstellung im Wesentlichen der Figur 3 entspricht, jedoch die in Form unausgefüllter Kreise dargestellten Datenpunkte einen Gehalt von 0 Volumenprozent Wasser im Einsatz betreffen und die die in Form ausgefüllter Kreise und Dreiecke jeweils einen Gehalt von 4 Volumenprozent Wasser im Einsatz betreffen. Während die in Form ausgefüllter Kreise dargestellten Datenpunkte für eine stündliche Gasraumgeschwindigkeit (Gas Hourly Space Velocity, GHSV) von 10.000 h⁻¹ ermittelt wurden, wurden die in Form unausgefüllter Kreise und ausgefüllter Dreiecke dargestellten Datenpunkte im Gegensatz dazu jeweils für Gasraumgeschwindigkeiten von 20.000 h⁻¹ ermittelt. Ferner betreffen die ausgefüllten Dreiecke und Kreise einen Gehalt an 4.700 vppm Wasserstoff, während die unausgefüllten Kreise einen Gehalt von nur 370 vppm Wasserstoff entsprechen.

Die Figur 4 beschreibt damit die Leistung des Katalysators unter trockenen Bedingungen und niedriger Wasserstoffkonzentration im Vergleich zu hoher Wasserkonzentration und hoher Wasserstoffkonzentration. Das Beispiel beweist, dass die richtige Wahl des Katalysators die finale Aufbereitung des Sauerstoffstroms in entsprechenden Adsorptionstrocknern, wie in Figur 2 veranschaulicht, bei niedrigen Temperaturen und geringer Wasserstoffkonzentration ermöglicht. In diesem Fall wäre eine 92%ige Umwandlung für die erste(n) Teilumsetzung(en) bereits ausreichend, was eine Verwendung hoher stündlicher Gasraumgeschwindigkeiten, geringerer Katalysatormengen und geringerer Druckverlust und/oder niedrigerer Einlasstemperaturen erlaubt.

Nochmals zusammengefasst erlaubt eine Anordnung, wie sie in Figur 2 veranschaulicht ist, eine stündliche Gasraumgeschwindigkeit in der ersten Teilumsetzung 3, damit ein kleineres Bettvolumen und geringere Katalysatorkosten sowie geringere Druckverluste. Ferner kann eine geringere Eintrittstemperatur in der ersten Teilumsetzung 3 erzielt werden, was zu geringeren Materialanforderungen für die Verwendung mit Sauerstoff und einem geringeren Energieverbrauch führt. Eine etwaige Alterung des Katalysators in der ersten Teilumsetzung 3 kann durch die zweite Teilumsetzung in den Druckbehältern 11a, 11b bzw. den katalytischen Betten 8a, 8b erzielt werden. Daher besteht in entsprechenden Ausgestaltungen keine Notwendigkeit mehr, die Wärmezufuhr für die Vorwärmung 2 zu erhöhen bzw. ein Overdesign zur Kompensation der Alterung vorzusehen.

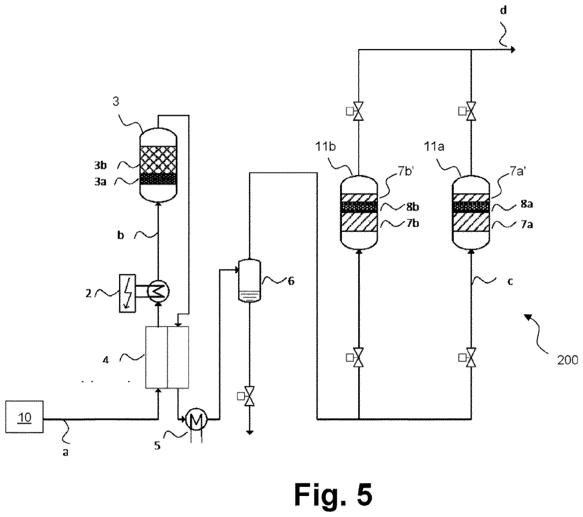

In Figur 5 ist ein Verfahren zur Herstellung von Elektrolysesauerstoff gemäß einer weiteren Ausgestaltung der Erfindung dargestellt und insgesamt mit 200 bezeichnet.

Die gemäß dem Verfahren 200, das in Figur 5 dargestellt ist, vorgenommenen Modifikationen gegenüber dem Verfahren 100, das in Figur 2 dargestellt ist, umfassen insbesondere die erste Teilumsetzung 3. Diese umfasst hier zwei katalytische Betten bzw. Schichten 3a, 3b. Wie hier veranschaulicht, kann zur weiteren Kostenoptimierung ist eine entsprechende Schichtung verschiedener Katalysatortypen innerhalb der ersten Teilumsetzung 3 möglich. So kann z.B. Eingang ein Katalysator(bett) 3a mit hoher Edelmetallbeladung oder hoher Wasserbeständigkeit angeordnet werden, gefolgt von einem günstigeren Katalysator(bett) 3b mit geringerer Edelmetallbeladung. Das erste Bett 3a wandelt daher Wasserstoff bereits bei niedrigeren Temperaturen um, und erhöht die Temperatur unter adiabatischen Bedingungen. Bei ausreichend hohen Temperaturen von typischerweise mehr als 100 °C können dann in dem zweiten Bett 3b auch Katalysatoren mit geringerer Metallbeladung zur weiteren Wasserstoffentfernung verwendet werden.

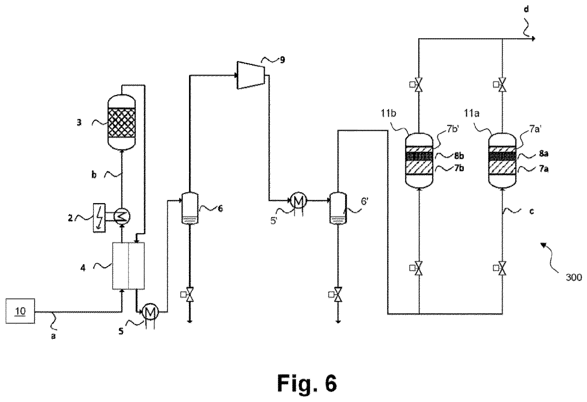

In Figur 6 ist ein Verfahren zur Herstellung von Elektrolysesauerstoff gemäß einer weiteren Ausgestaltung der Erfindung dargestellt und insgesamt mit 300 bezeichnet.

In Modifikation zu dem in Figur 2 veranschaulichten Verfahren 100 ist hier eine zweistufige kondensative Wasserabscheidung mit einem zwischengeschalteten Verdichter 9, einem weiteren Kühler 5', und einem weiteren Abscheider 6' vorgesehen. Hierdurch kann insbesondere eine weitere Steigerung der Effizienz in der nachgeschalteten adsorptiven Trocknung und der katalytischen Umsetzung erzielt werden. Hierbei kann mittels des Verdichters 9 der Systemdruck erhöht und nach der Abkühlung 5' kann zusätzliches Wasser auskondensiert werden. Je nach Eingangsdruck des Anodengases a kann die Verdichtung 9 als ein- oder mehrstufige Verdichtung erfolgen und dabei insbesondere mit einer oder mehreren Stufen auch stromab des Abscheiders 11 ausgeführt werden.

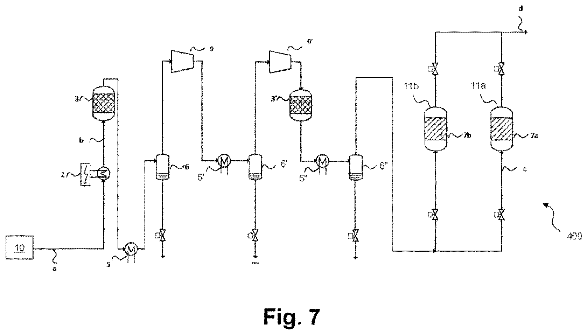

In Figur 7 ist ein Verfahren zur Herstellung von Elektrolysesauerstoff gemäß einer weiteren Ausgestaltung der Erfindung dargestellt und insgesamt mit 400 bezeichnet.

In Modifikation zu dem in Figur 6 veranschaulichten Verfahren 400 ist hier eine weitere Verdichtung 9', beispielsweise unter Verwendung eines mehrstufigen Verdichters, vorgesehen, der Kompressionswärme in das Anodengas b einbringt. Dies erlaubt eine effizientere katalytische Umsetzung in einer zweiten Teilumsetzung, die hier in einem separaten Behälter 3' vorgenommen wird. Auch nach z.B. mehrfacher Verdichtung vermeidet die vorgeschaltete Teilumsetzung 3 eine Wasserstoffkonzentration oberhalb der Explosionsgrenzen. Daher kann das nachgeschaltete System mit einem niedrigeren Auslegungsdruck gebaut werden. Die zweite Teilumsetzung 3' ist durch die Nutzung der Kompressionswärme effizienter. Wenn diese nach der zweiten Verdichtung 9' angeordnet ist, wird neben höheren Eintrittstemperaturen auch ein niedrigerer Wasserpartialdruck die Effizienz erhöhen. Eine weitere Kühlung ist mit 5", eine weitere Wasserabscheidung mit 6" bezeichnet.

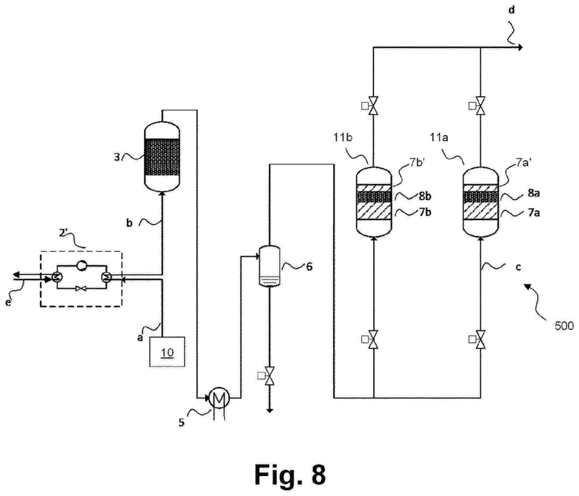

In Figur 8 ist ein Verfahren zur Herstellung von Elektrolysesauerstoff gemäß einer weiteren Ausgestaltung der Erfindung dargestellt und insgesamt mit 500 bezeichnet.

In Modifikation zu dem in Figur 2 veranschaulichten Verfahren 100 ist hier zur weiteren Effizienzsteigerung ein Wärmeeintrag für die hier mit 2' bezeichnete Vorwärmung vor der ersten Teilumsetzung 3 unter Verwendung von Abwärme aus der Elektrolyse vorgesehen. Der Elektrolysestapel muss gekühlt werden (Energieeffizienz unter 80%). Daher wird die überschüssige Energie in Form von Wärme aus dem Elektrolysestapel entfernt, indem das Elektrolyse-Recyclingwasser gekühlt wird. Diese Energie kann zur Vorwärmung des Eingangsstroms a verwendet werden. Normalerweise liegt die Temperatur des Elektrolyse-Recyclingwassers e bei 50-80°C. Eine Hochtemperatur-Wärmepumpe 2' dazu verwendet werden, um das Temperaturniveau auf 90 °C und höher anheben. Auf diese Weise kann der zusätzliche Energieaufwand für die Vorwärmung 2' minimiert oder sogar ersetzt werden.

## Patentansprüche

1. Verfahren (100, 200, 300, 400, 500) zur Herstellung von Elektrolysesauerstoff, wobei das Verfahren (100, 200, 300, 400, 500) umfasst, dass
- einer Elektrolyseeinrichtung (10) ein Sauerstoff, Wasserstoff und Wasser enthaltendes Anodengas (a, b) entnommen wird,
- in dem Anodengas (a, b) oder einem Teil hiervon der Wasserstoff oder ein Teil hiervon einer katalytischen Umsetzung (3, 3', 8a, 8b) mit einem Teil des Sauerstoffs zu weiterem Wasser unterworfen wird, und
- das Anodengas (a, b) oder ein Teil hiervon einer Trocknung (5, 6, 5', 6', 5", 6", 7a, 7b, 7a', 7b') unterworfen wird,
**dadurch gekennzeichnet, dass**
- die katalytische Umsetzung (3, 3', 8a, 8b) eine oder mehrere erste Teilumsetzungen (3) und stromab der ersten Teilumsetzung(en) (3) eine oder mehrere zweite Teilumsetzungen (3', 8a, 8b) umfasst, und
- die Trocknung (5, 6, 5', 6', 5", 6", 7a, 7b, 7a', 7b') eine oder mehrere erste Teiltrockungen (5, 6, 5', 6', 5", 6", 7a, 7b) stromab der ersten Teilumsetzung(en) (3) und stromauf der zweiten Teilumsetzung(en) (3', 3, 8a, 8b) und eine oder mehrere zweite Teiltrockung(en) (7a', 7b') stromab der zweiten Teilumsetzung(en) (3', 3, 8a, 8b) umfasst.

2. Verfahren (100, 200, 300, 500) nach Anspruch 1, bei dem ein Teil der erste(n) Teiltrocknung(en) (5, 6, 5', 6', 5", 6", 7a, 7b), die zweite(n) Teiltrocknung(en) (7a', 7b') und die zweite(n) Teilumsetzung(en) (8a, 8b) unter Verwendung eines oder mehrerer, zumindest periodisch mit dem Anodengas (a, b) oder einem Teil hiervon durchströmter Druckbehälter durchgeführt werden, in dem oder denen von stromauf nach stromab ein oder mehrere erste Adsorptionstrocknungsbetten, ein oder mehrere katalytische Betten, und ein oder mehrere zweite Adsorptionstrocknungsbetten angeordnet ist oder sind.

3. Verfahren (100, 200, 300, 500) nach Anspruch 2, bei dem zumindest zwei Druckbehälter verwendet werden, die jeweils in ersten Zeitabschnitten mit dem Anodengas (a, b) oder einem Teil hiervon durchströmt und in zweiten Zeitabschnitten thermisch regeneriert werden.

4. Verfahren (100, 200, 300, 400, 500) nach einem der Ansprüche 1 bis 3, bei dem die erste(n) Teiltrocknung(en) (5, 6, 5', 6', 5", 6", 7a, 7b) eine oder mehrere Kondensationstrocknungen (5, 6, 5', 6', 5", 6",) umfasst oder umfassen.

5. Verfahren (300, 400) nach Anspruch 4, bei dem zwei oder mehrere Kondensationstrocknungen (5, 6, 5', 6', 5", 6",) durchgeführt werden, zwischen denen eine Verdichtung (9) vorgenommen wird.

6. Verfahren (400) nach Anspruch 5, bei dem stromab der Kondensationstrocknungen (5, 6, 5', 6', 5", 6",) eine Verdichtung (9') vorgenommen wird, im Zuge derer das Anodengas (a, b) oder ein Teil hiervon auf ein erhöhtes Temperaturniveau gebracht wird, wobei das Anodengas (a, b) oder ein Teil hiervon auf dem erhöhten Temperaturniveau der oder den zweiten Teilumsetzung(en) (3', 3, 8a, 8b) zugeführt wird.

7. Verfahren (200) nach einem der vorstehenden Ansprüche, bei dem die erste(n) Teilumsetzung(en) (3) unter Verwendung mehrerer Katalysatoren oder Katalysatorbetten durchgeführt werden.

8. Verfahren (100, 200, 300, 400, 500) nach einem der vorstehenden Ansprüche, bei dem mittels der erste(n) Teilumsetzung(en) (3) 80 bis 99% des Wasserstoffs aus dem Anodengas (a, b) oder einem Teil hiervon entfernt wird.

9. Verfahren (100, 200, 300, 400, 500) nach einem der vorstehenden Ansprüche, bei dem mittels der zweiten Teilumsetzung(en) (3', 3, 8a, 8b) ein Wasserstoffgehalt in dem Anodengas (a, b) auf weniger als 10 Millionstel Volumenanteile reduziert wird.

10. Verfahren (500) nach einem der vorstehenden Ansprüche, bei dem das Anodengas (a, b) oder ein Teil hiervon unter Verwendung eines Wärmepumpenprozesses (2') erwärmt wird.

11. Verfahren (100, 200, 300, 400, 500) nach einem der vorstehenden Ansprüche, bei unter Verwendung der Elektrolyseeinrichtung (100) eine alkalische Wasserelektrolyse und/oder eine Wasserelektrolyse unter Verwendung einer Protonenaustauschmembran durchgeführt wird.

12. Anlage zur Herstellung von Elektrolysesauerstoff, die dafür eingerichtet ist,
- einer Elektrolyseeinrichtung (100) ein Sauerstoff, Wasserstoff und Wasser enthaltendes Anodengas (a, b) zu entnehmen,
- in dem Anodengas (a, b) oder einem Teil hiervon den Wasserstoff oder einen Teil hiervon einer katalytischen Umsetzung mit einem Teil des Sauerstoffs zu weiterem Wasser zu unterwerfen, und
- das Anodengas (a, b) oder ein Teil hiervon einer Trocknung (5, 6, 5', 6', 5", 6", 7a, 7b, 7a', 7b') zu unterwerfen,
**gekennzeichnet durch** Mittel, die dafür eingerichtet sind,
- die katalytische Umsetzung (3, 3', 8a, 8b) als eine oder mehrere erste Teilumsetzungen (3) und stromab der ersten Teilumsetzung(en) (3) als eine oder mehrere zweite Teilumsetzungen (3', 8a, 8b) umfassend durchzuführen, und
- die Trocknung (5, 6, 5', 6', 5", 6", 7a, 7b, 7a', 7b') als eine oder mehrere erste Teiltrockungen (5, 6, 5', 6', 5", 6", 7a, 7b) stromab der ersten Teilumsetzung(en) (3) und stromauf der zweiten Teilumsetzung(en) (3', 3, 8a, 8b) und als eine oder mehrere zweite Teiltrockung(en) (7a', 7b') stromab der zweiten Teilumsetzung(en) (3', 3, 8a, 8b) umfassend durchzuführen.

13. Anlage nach Anspruch 12, die zur Durchführung eines Verfahrens (100, 200, 300, 400, 500) nach einem der Ansprüche 1 bis 11 eingerichtet ist.
